# FASCICULE DE BREVET EUROPEEN

(11) **EP 0 629 809 B1**
(45) Date de publication et mention de la délivrance du brevet: **04.03.1998**
(21) Numéro de dépôt: 94401200.4
(22) Date de dépôt: 31.05.1994
(51) Int. Cl.: F17C 1/06, F17C 5/06, B60K 15/07

(54) **Réservoir de stockage d'hydrocarbures sous pression**
Lagerbehälter für Kohlenwasserstoffe unter Druck
Pressurised hydrocarbons storage container

(30) Priorité: 18.06.1993 FR 9307394
(43) Date de publication de la demande: 21.12.1994
(73) Titulaire: INSTITUT FRANCAIS DU PETROLE, 92502 Rueil-Malmaison (FR)
(72) Inventeur: Dawans, Francois, F-78380 Bougival (FR); Le Page, Jean-Francois, F-92500 Rueil Malmaison (FR)

(56) Documents cités:
- CA-A- 1 208 742
- DE-A- 3 743 804
- FR-A- 2 672 370
- GB-A- 532 208
- GB-A- 2 200 198

## Description

La présente invention concerne un système de stockage et /ou de distribution de fluides sous pression.

Le système selon l'invention s'applique notamment dans le domaine des transports. Dans le contexte actuel, les transports sont le centre des préoccupations relatives aux sources d'énergie et de pollution. En ce qui concerne l'énergie, des impératifs économiques favorisent l'utilisation des énergies de substitution aux carburants classiques. Si l'on se place sur le plan de la pollution, les normes sont de plus en plus sévères et conduisent à un même constat qui est de favoriser le développement des nouveaux carburants, appelés couramment carburants de substitution.

On observe donc une utilisation de plus en plus importante, notamment du gaz de pétrole liquéfié (en abrégé GPL) ou du gaz naturel, ce dernier pouvant se présenter sous forme gazeuse ou liquide. En effet, les hydrocarbures tels que le méthane, l'éthane, le propane, le butane et le gaz naturel constituent des carburants adaptés aux contraintes économiques et respectant les normes adoptées pour la protection de l'environnement.

Bien que l'utilisation de ces hydrocarbures soit en place depuis de nombreuses années, et que leur combustion dans les moteurs conventionnels ne présente pas de problème majeur, la généralisation de leur emploi, notamment pour les véhicules utilitaires, tels que des camions ou autobus, est restreinte pour des questions de stockage des hydrocarbures sous pression. Ceci nécessite de maintenir les réservoirs et les lignes ou conduites d'alimentation du moteur en hydrocarbures sous des pressions élevées, c'est pourquoi on utilise, dans la majorité des cas, des réservoirs en acier. L'inconvénient majeur de ces réservoirs est leur poids qui représente alors, au minimum, l'équivalent du poids de l'hydrocarbure comprimé lorsque le réservoir est plein.

Pour pallier cet inconvénient et alléger ces réservoirs, l'art antérieur propose différents types de réservoirs. Le document "Energies nouvelles pour l'automobile" de Jean Orselli aux éditions Paradigme présente un état général de la technique employée dans le contexte actuel.

II a tout d'abord été proposé de diminuer l'épaisseur de la paroi métallique constituant le réservoir et de la fretter à l'aide d'un ruban à base de fibres renforçantes et d'une résine thermoplastique. Les propriétés de résistance à la pression des réservoirs allégés ainsi obtenus sont satisfaisantes mais leur utilisation est limitée du fait du vieillissement qui peut être accéléré sous l'effet de paramètres tels que la température, la dégradation chimique ou photochimique, ces paramètres pouvant provoquer une diminution de la résistance à la pression due vraisemblablement au fluage de la matrice thermoplastique et à une détérioration de l'effet renforçant des fibres renforçantes.

D'autres réservoirs allégés proposés selon l'art antérieur sont entièrement à base de matériaux composites et ils sont généralement obtenus par le bobinage de fibres imprégnées de résine thermodurcissable. Ce réservoirs comportent parfois une couche interne d'étanchéité à base de résine thermoplastique ou de caoutchouc. Ce type de réservoir est performant en propriétés instantanées mais leur comportement n'est pas aussi satisfaisant en fatigue dynamique, par exemple, lors de cycles répétés de mise en pression et décompression ; en outre, ces réservoirs sont relativement onéreux et leur utilisation pratique est par conséquent limitée pour des questions économiques.

Pour remédier à ces inconvénients, les brevets FR-2.553.860, FR-2.661.447, FR-2.669.396 et FR-2.672.370 du demandeur décrivent des réservoirs allégés pour le stockage de fluides sous pression composés d'une structure cylindrique tubulaire, mince, ondulée, plastique ou métallique, les creux des ondulations étant garnis d'éléments de renfort fibreux liés par une résine thermodurcissable, et renforcée longitudinalement par un élément de renfort externe déposé sur la structure externe du réservoir. En particulier le document FR-2.661.447 mentionne l'utilisation d'une telle structure comme capacité de stockage de fluides sous pression, par exemple comme réservoir de gaz sous pression pouvant être embarqué sur un véhicule. Néanmoins, le temps de remplissage d'une telle structure est long, notamment, pour des raisons thermodynamiques liées à la mise sous pression de l'hydrocarbure lors du transvasement et aux caractéristiques géométriques de la structure ne favorisant pas l'évacuation de la chaleur stockée au cours du remplissage. On observe en fait un échauffement, en particulier dans les zones de fond du réservoir.

II a été découvert qu'en utilisant un réservoir ou capacité de stockage, composé de plusieurs containers, par exemple, des structures tubulaires courtes, reliées entre elles par un dispositif d'alimentation, on diminuait l'échauffement du réservoir au cours de son remplissage du fait du brassage assuré par la répartition de l'entrée du flux des hydrocarbures sur plusieurs structures courtes dont l'ensemble possède une longueur équivalente à la longueur d'une structure unique habituellement utilisée.

Le système selon la présente invention permet le stockage et la distribution de fluides sous pression, tels que des hydrocarbures gazeux destinés à alimenter le moteur d'un véhicule, comportant plusieurs containers comportant au moins un orifice d'entrée, des moyens d'admission et de contrôle de la distribution du fluide sous pression dans le système, des lignes de transfert du fluide sous pression, les lignes de transfert reliant les moyens d'admission et de contrôle à au moins un des orifices d'entrée des containers, caractérisé en ce que :
- les containers comportent, par exemple, une partie cylindrique ayant deux extrémités, la zone cylindrique étant constituée d'une gaine interne ondulée, les parties creuses des ondulations étant garnies d'un élément de renfort, et
- les moyens d'admission et de contrôle étant adaptés, par exemple, à permettre simultanément, pendant une partie au moins du remplissage des containers par le fluide sous pression, un libre passage au fluide sous pression entre les moyens d'admission et de contrôle et au moins deux containers.

Les lignes de transfert peuvent comporter un moyen de contrôle de l'écoulement dudit fluide.

Le système comporte au moins un dispositif de commande et de contrôle de l'écoulement dudit fluide sous pression entre lesdits moyens d'admission et de contrôle et au moins deux containers.

L'élément de renfort est, par exemple, un élément de renfort circonférentiel constitué d'une résine armée de fibres, tel que des fibres de verre ou des fibres de carbone.

Le container peut comporter des moyens de résistance à la traction longitudinale placés sur l'ensemble du container à l'exception des ouvertures dudit container, lesdites ouvertures étant situées aux extrémités de la zone cylindrique.

La gaine est, en métal, par exemple, de l'acier inoxydable ou de l'aluminium.

La gaine peut aussi être en matériau thermoplastique, par exemple, en polyéthylène haute densité, polyamide ou en polyfluorure de vinylidène.

Le système peut comporter au moins un container auxiliaire de sécurité pour récupérer les fluides sous pression s'échappant d'au moins un des containers.

Les containers sont, par exemple, disposés sous forme de couches superposées en quinconce, les containers étant décalés les uns par rapport aux autres.

L'ensemble des containers est placé, par exemple, dans une enveloppe, l'espace compris entre l'enveloppe et les containers étant rempli d'un matériau alvéolaire, tel que du polyuréthanne.

II peut aussi être utilisé comme réservoir de gaz naturel sous pression disposé sur le toit d'un véhicule utilitaire dans le domaine des transports en commun ou de transports de marchandises.

Le système selon l'invention permet de minimiser l'échauffement de l'hydrocarbure lors de la phase de remplissage du fait de l'agencement des containers et du système d'alimentation des différents containers.

Un autre objet de l'invention est l'augmentation de la fiabilité et de la sécurité d'un tel système grâce à la présence d'un container réservé à l'évacuation des hydrocarbures dans le cas d'une rupture d'un des containers du système. Cette adaptation du système est rendue possible du fait de la légèreté des containers employés.

Un autre objet de l'invention réside dans la modularité du système qui permet d'adapter la capacité de stockage en fonction du véhicule ou des besoins en stockage de fluide sous pression.

Un tel système possède de plus un faible encombrement pour une capacité égale de stockage des fluides sous pression, et donc peut être aisément logé dans divers endroits du véhicule, ce qui présente un intérêt non négligeable pour des raisons de sécurité et de facilité d'accès.

L'invention et ses caractéristiques seront mieux comprises à la lecture de la description suivante, qui est annexée des figures représentant respectivement :
- la figure 1 montre un schéma de principe du système selon l'invention,
- la figure 2 est une coupe d'une portion de la zone cylindrique ondulée d'un container faisant partie du système,
- la figure 3 montre un autre mode de réalisation du système,
- la figure 4 schématise un mode de réalisation comportant un container auxiliaire de sécurité, et
- les figures 5A et 5B montrent la disposition des containers mis en place sur un véhicule utilitaire.

Le système selon l'invention et sa mise en oeuvre reposent sur l'utilisation de plusieurs containers constitués par des structures courtes et légères capables de contenir des fluides sous pression, tels que des hydrocarbures, et d'un agencement approprié de ces containers par rapport à un système d'alimentation en hydrocarbure permettant de réduire l'échauffement des structures courtes lors de leur remplissage, et ainsi de minimiser la durée de remplissage de l'ensemble des structures.

La description qui suit est un exemple de réalisation d'un réservoir pour le stockage d'hydrocarbures tels que le méthane, l'éthane, le propane, le butane ou le gaz naturel, composé de plusieurs containers et utilisé sur un véhicule de transport en commun, par exemple, un autobus.

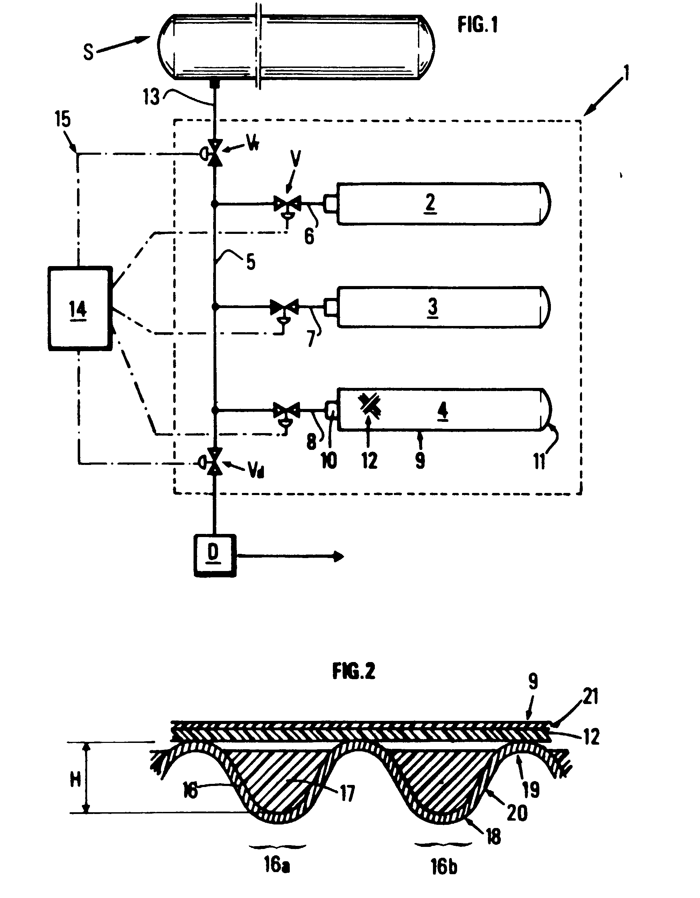

Le réservoir 1 de la figure 1 comporte plusieurs containers 2, 3, 4 reliés entre eux par une conduite principale 5, chaque container étant relié à la conduite 5 respectivement par une conduite 6, 7, 8. Chaque container 2, 3, 4 est, par exemple, constitué d'une structure tubulaire ou cylindrique 9, (Fig. 2), fabriquée selon le brevet FR-2.553.860 du demandeur, équipée à une de ses extrémités d'un embout muni d'au moins une ouverture et de moyens 10 de fermeture ou de communication avec l'extérieur permettant sa connexion respectivement à la conduite 6, 7, 8 et à l'autre extrémité d'un fond 11. Le container est recouvert de moyens de résistance à la traction longitudinale 12, entourant le container à l'exception des ouvertures.

Les moyens de communication entre les containers et l'extérieur sont, par exemple, une vanne ou un bouchon tels que ceux normalisés pour le stockage des gaz liquéfiés ou des gaz comprimés.

Les conduites 6, 7, 8 comportent, par exemple, une vanne V permettant d'isoler les containers 2, 3, 4 du reste du système.

La canalisation principale 5 est reliée à une station de distribution S par l'intermédiaire d'une conduite 13 et d'une vanne Vr permettant de contrôler le remplissage des différents containers en hydrocarbure et, éventuellement, d'une vanne Vd de distribution des hydrocarbures vers un dispositif D, tel qu'un détendeur, ramenant l'hydrocarbure à la pression d'admission du moteur du véhicule sur lequel est embarqué le réservoir, comme il est bien connu des spécialistes. Ces vannes Vr, Vd sont, par exemple, des électrovannes haute pression utilisées habituellement pour les véhicules fonctionnant au GPL ou au gaz naturel.

Les containers sont équipés, par exemple, des dispositifs classiques, non représentés sur la figure, tels qu'un dispositif d'arrêt automatique de remplissage, une jauge de contrôle de niveau de carburant et un capteur de pression. Le dispositif d'arrêt automatique de remplissage est réglé par rapport à une valeur seuil correspondant à un niveau d'hydrocarbure dans le container qu'il est préférable de ne pas dépasser, la valeur seuil étant dénommée dans la suite de la description niveau seuil de remplissage.

Les différentes vannes V, et électrovannes Vr, Vd sont reliées, de préférence, à un microprocesseur 14, par l'intermédiaire de liaisons électriques 15.

Elles peuvent aussi être reliées directement à un tableau de bord délivrant des informations au conducteur.

La zone cylindrique 9 (Fig.2) du container est constituée d'une gaine interne 16 ondulée dont les portions creuses 16a, 16b sont remplies de fibres de renforts 17 sur la presque totalité de leur hauteur H. Il est indispensable de remplir les portions creuses, à partir du fond (qui correspond à la face externe de ladite gaine) jusqu'à la zone où le rayon de courbure de la zone externe de l'ondulation de la gaine devient sensiblement constant (ce qui correspond à une variation du rayon courbure inférieure à 10%).

La gaine ondulée est constituée de portions de cercle successives 18, 19, pouvant être séparées ou non par des portions 20 sensiblement rectilignes vu en coupe, et correspondant à des zones sensiblement tronconiques, en représentation spatiale.

Les formes constituées par les portions creuses et en relief successives peuvent constituer des anneaux successifs ou adopter une forme hélicoïdale.

Les moyens de résistance à la traction longitudinale 12 disposés sur l'ensemble du container peuvent être constitués de fibres déposées sur l'ensemble de la structure externe du container à l'exception des ouvertures.
Ces moyens de résistance à la traction longitudinale 12 ou renfort longitudinal sont, de préférence, constitués de fibres synthétiques, telles que des fibres d'aramide, de carbone ou de verre, éventuellement imprégnées d'élastomère ou de résine thermoplastique. Ces fibres sont mises en place, par exemple, par bobinage ou par la pose d'une tresse sur la structure externe.
Le but étant de reprendre l'effet de fond de la partie cylindrique ou tubulaire du container, tout autre moyen permettant d'obtenir ce résultat peut aussi être utilisé.

La gaine est constituée, de préférence, en métal tel que de l'aluminium ou de l'acier inoxydable.

Selon un autre mode de réalisation de l'invention, la gaine est fabriquée en polymère thermoplastique, tel que le polyéthylène haute densité, éventuellement réticulé, le polypropylène, les polyamides 6, 6.6, 11 ou 12 ou le polyfluorure de vinylidène qui présentent, de plus, une bonne tenue et une faible perméabilité au contact des hydrocarbures sous pression.

Les fibres de renfort formant les renforts circonférentiels sont constitués de résine armée de fibres, par exemple de verre ou de carbone, la résine étant de type époxy, polyester ou vinyl ester. Cet exemple est non limitatif, les renforts peuvent être constitués de tout matériau permettant d'obtenir une bonne résistance à la pression circonférentielle.

L'ensemble de la zone cylindrique ou tubulaire peut être revêtue d'une couche extérieure de protection 21 obtenue, par exemple, par extrusion d'une couche mince d'un thermoplastique, tel que le polyéthylène ou encore par l'enroulement hélicoïdal d'une bande d'un matériau plastique ou élastomérique. Cette couche de protection améliore la résistance aux chocs ; elle permet de répartir d'éventuelles contraintes extérieures sur l'ensemble de la structure et elle protège les renforts fibreux contre la déchirure.

Le remplissage d'un tel système peut se faire, par exemple, de la manière suivante : on vient connecter la conduite 5 à la conduite de distribution d'hydrocarbure 13, l'embout de la conduite de remplissage étant situé à un emplacement du moteur tel, qu'il empêche le départ du véhicule hors de la station si la conduite n'est pas débranchée. On commande manuellement ou le microprocesseur 14 commande l'ouverture de la vanne Vr, la vanne Vd étant fermée et maintenue fermée pendant l'opération de remplissage des containers. Les vannes V étant en position ouverte, l'hydrocarbure, par exemple du gaz naturel sous pression provenant de la station de distribution S passe par la conduite 5 puis se répartit indifféremment dans les conduites 6, 7, 8 débouchant dans les différents containers. La jauge de contrôle de niveau de carburant équipant un container envoie un signal au dispositif d'arrêt automatique de remplissage qui commande la fermeture de la vanne V du container concerné dès que le niveau de l'hydrocarbure atteint un niveau de seuil fixé préalablement. Au fur et à mesure de l'opération de remplissage de réservoirs, le dispositif d'arrêt automatique de remplissage ferme les différentes vannes V, indiquant ainsi que le réservoir est rempli, et le microprocesseur 14 commande la fermeture de la vanne de remplissage Vr. On déconnecte ensuite le véhicule de la station de distribution en déconnectant la conduite 5 de la station de remplissage.

Après déconnexion du véhicule, le microprocesseur 14 commande les ouvertures de la vanne Vd et d'au moins une des vannes V. Les ouvertures de ces vannes permettent le passage du gaz naturel sous pression vers le détendeur D et le démarrage du véhicule.

La répartition quasi-uniforme du flux de gaz naturel sous pression dans les différents containers diminue l'échauffement de chaque container et donc l'échauffement de l'ensemble du réservoir par rapport à celui qui existerait dans un réservoir composé d'un container unique ayant une capacité de stockage équivalente à l'ensemble des containers.

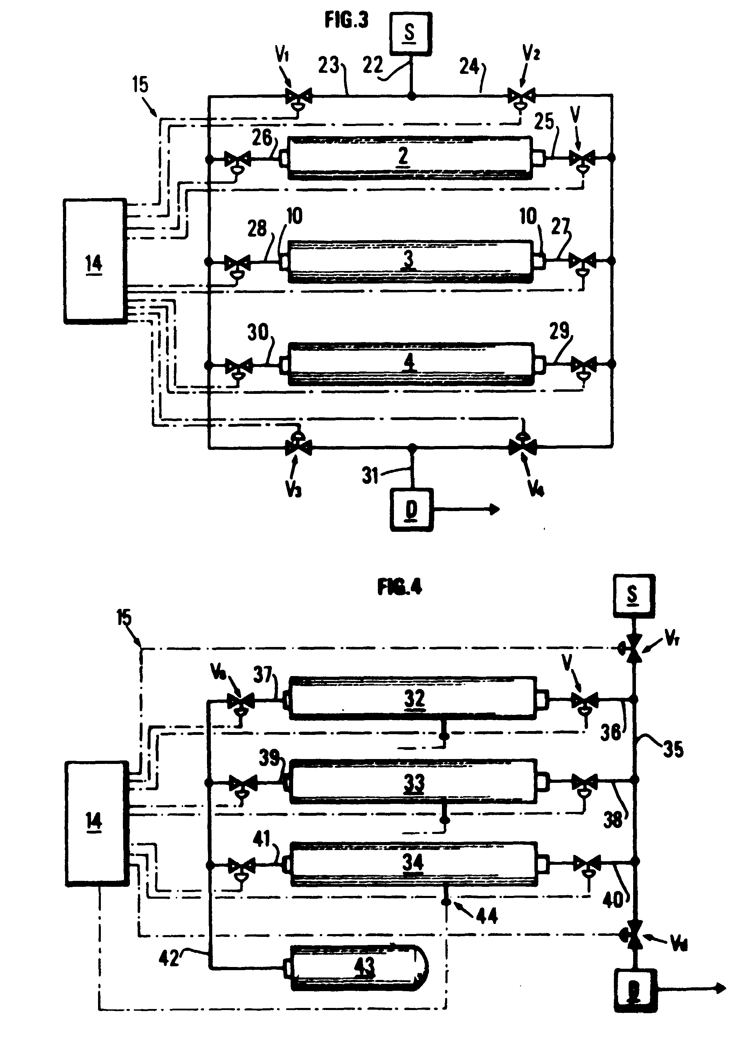

Dans le mode de réalisation de la figure 3, les containers sont constitués d'une zone cylindrique dont chaque extrémité est munie d'un embout comportant des moyens 10 de communication. Les containers peuvent ainsi être connectés par une extrémité ou par leur deux extrémités à des conduites permettant l'arrivée des hydrocarbures.

Le réservoir 1 est reliée à la station de distribution des hydrocarbures par l'intermédiaire d'une canalisation principale 22 se scindant en deux canalisations 23, 24. Les containers 2, 3, 4 sont reliés à la canalisation 23 par des conduites secondaires 26, 28, 30 et à la canalisation 24 par des conduites secondaires 25, 27, 29. Les canalisations 23 et 24 se regroupent en une canalisation unique 31 débouchant dans le dispositif D. Les canalisations 23 et 24 sont munies de vannes V1, V2 contrôlant le remplissage des containers avec l'hydrocarbure et de vannes V3, V4 qui contrôlent la distribution de cet hydrocarbure des containers vers le dispositif D.

En utilisant les deux extrémités pour remplir les containers d'hydrocarbures, on minimise le temps de remplissage de chaque container, donc du réservoir.

La séquence de remplissage d'un tel réservoir consiste, par exemple, à connecter la conduite 22 à la source de distribution S, puis de façon manuelle ou par l'intermédiaire du microprocesseur 14 à commander l'ouverture des vannes V1, V2, les vannes V3, V4 étant fermées et maintenues fermées pendant l'opération de remplissage des containers. Le gaz naturel sous pression passe par la conduite 22, puis se répartit indifféremment dans les conduites 25, ....30 suivant l'état des vannes V, autorisant ou non le passage du gaz vers les containers. De manière identique à la description faite en se référant à la figure 1, les jauges de contrôle de niveau de carburant équipant les containers envoient un signal au dispositif d'arrêt automatique de remplissage pour que ce dernier commande la fermeture des vannes V dès que le niveau seuil de remplissage est atteint dans un container. A la fin du remplissage le microprocesseur 14 ferme les vannes V1, V2, puis déconnecte la conduite 5 de la station de remplissage.

Il commande ensuite l'ouverture d'au moins une des vannes V3, V4 et d'au moins une des vannes V, laissant ainsi le gaz passer dans le dispositif D.

Une autre manière d'exploiter le mode de réalisation décrit à la figure 3 consiste à utiliser une des conduites latérales, par exemple 23 pour le remplissage des containers et l'autre conduite 24 pour décharger au moins une partie du gaz des containers vers le détendeur D. Dans ce cas les conduites 22 et 31 ne font plus partie du dispositif. Les conduites 23 et 24 servent respectivement de conduite de remplissage et conduite de déchargement du gaz, ces deux conduites sont alors reliées directement à la station de remplissage S et au détendeur D.

L'avantage de ce dispositif réside principalement dans la simplification de la fabrication des réservoirs tubulaires ou cylindriques comportant un embout posé à chaque extrémité de la structure tubulaire renforcée et dans la fiabilité des réservoirs ainsi obtenus qui ne comportent plus de fond, par exemple, hémisphérique.

Une réalisation particulièrement avantageuse du système selon l'invention consiste à augmenter la sécurité et la fiabilité des systèmes de stockage d'hydrocarbures embarqués sur des véhicules utilitaires. En particulier, les réservoirs selon l'invention sont plus souples que les réservoirs allégés proposés selon l'art antérieur ; ils présentent par conséquent une meilleure résistance à la déformation en cas de chocs accidentels.

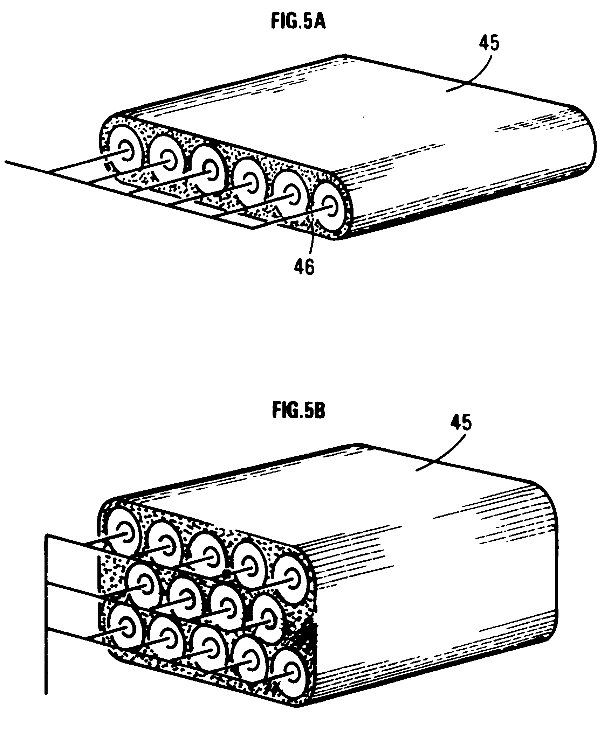

La figure 4 décrit un réservoir de stockage d'hydrocarbure comprenant un container auxiliaire dont la fonction est de récupérer le gaz s'échappant d'au moins un des containers composant le réservoir.

Le réservoir 1 est constitué de plusieurs containers 32, 33, 34 reliés à une conduite d'alimentation principale 35 par l'intermédiaire de conduites secondaires 36, 38 et 40 situées à une première extrémité des containers et par l'intermédiaire de conduites secondaires 37, 39, 41 situées à leur deuxième extrémité à une conduite de sécurité 42 débouchant dans un container auxiliaire 43.

Chaque container est équipé d'un dispositif d'alarme 44 capable de détecter une défaillance survenant au niveau du container. Ce dispositif est par exemple un capteur de pression, relié au microprocesseur par une liaison électrique 15. Le capteur indique au microprocesseur la variation dans le temps de la valeur de pression mesurée dans un container et la valeur de pression mesurée peut être comparée à des valeurs seuils fixées au préalable, correspondant à des valeurs d'alarme, par exemple, une faible valeur de pression dans le container ou une variation anormale dans le temps de la valeur de pression peut traduire une fuite de gaz pour un des containers.

La conduite principale 35 est équipée d'une vanne Vr de contrôle de remplissage des hydrocarbures provenant de la station de distribution S.

Les conduites secondaires 36, 38 et 40 sont équipées chacune d'une vanne V telles que celles décrites à la figure 1 permettant de contrôler le remplissage de chacun des containers 32, 33, 34.

Les conduites secondaires 37, 39, 41 sont équipées de vannes, dites de sécurité, Vs, ayant pour rôle de laisser passer l'hydrocarbure vers le container auxiliaire 43 dans le cas d'une détérioration ou de rupture d'un des containers. Ces vannes sont, par exemple, identiques aux vannes V et sont reliées par des liaisons électriques 15 au microprocesseur 14.

Le container auxiliaire 43 possède une structure identique à celle des containers 32, 33, 34, dans un souci d'homogénéité du système.

Selon un mode de réalisation avantageux et dans un souci d'encombrement minimal, les dimensions de ce container sont choisies inférieures à celles des containers de stockage constituant le réservoir puisque l'on ne récupère qu'une partie du gaz en fuite.

Un tel système peut fonctionner de la façon suivante : le capteur de pression 44 situé, par exemple, dans le container 32 envoie au microprocesseur 14 un signal indiquant une variation de pression anormale et une valeur de pression inférieure à une valeur seuil. Ce signal est pris en compte par le microprocesseur 14 qui commande alors l'ouverture de la vanne Vs de la conduite 37 de manière à laisser passer l'hydrocarbure du container 32 dans la conduite 42 débouchant dans le container auxiliaire 43. Le passage du gaz se fait jusqu'à ce que la valeur de pression mesurée soit sensiblement nulle. Le microprocesseur 14 isole ensuite le container du reste du système en fermant les vannes V et Vs appropriées.

Selon une réalisation avantageuse de l'invention, la conduite d'évacuation du gaz 42 est équipée d'un dispositif permettant de forcer le passage du gaz vers le container auxiliaire, ce dispositif étant situé près de l'extrémité du container auxiliaire.

Un des avantages offerts par ce système est de minimiser la quantité de gaz s'échappant dans la nature et de réduire ainsi les risques d'explosion et de pollution, en récupérant le gaz dans un container auxiliaire.

Dans tous les modes de réalisation préalablement décrits, l'ensemble des containers et des conduites dans lesquels passent les hydrocarbures ou le gaz sous pression, est de préférence placé dans une enveloppe protectrice 45 (Fig. 5), constituée par exemple en matériau plastique, en aluminium ou en matériau composite. L'espace compris entre l'enveloppe et les containers, ainsi que les différentes conduites est rempli, par exemple, par un matériau alvéolaire 46, tel qu'une mousse polyuréthanne. On peut aussi remplir cet espace d'un matériau présentant un bon comportement en cas d'inflammation de l'hydrocarbure, tel une composition expansible à base de résine phénolique. L'ensemble enveloppe et matériau constitue une enveloppe protectrice aux chocs et à l'échauffement de l'ensemble.

Des parois anti feu peuvent aussi être placées entre les containers.

Selon un autre mode de réalisation, les containers sont entourés individuellement d'un matériau résistant aux chocs et au feu.

Dans toutes les variantes du système, l'agencement des containers et le système d'alimentation associé, aboutissent à un réservoir léger pouvant être embarqué facilement sur des transports de type utilitaire ou sur des véhicules de type poids lourd et placés dans n'importe quel endroit du véhicule.

Ainsi, le réservoir de la figure 5A est constitué d'une couche de containers disposés en parallèle, le réservoir est placé dans une enveloppe 45 et sur le toit d'un véhicule.

Selon une autre variante de réalisation, la figure 5B montre un réservoir de stockage dans son utilisation finale composé de plusieurs couches de containers disposés de préférence en quinconce, placés dans une enveloppe 45, l'ensemble étant positionné sur le toit du véhicule. Ce mode de réalisation permet d'augmenter la capacité de stockage de l'hydrocarbure tout en diminuant l'espace occupé par le réservoir.

A titre de comparaison avec l'art antérieur, la masse du réservoir ainsi constitué est inférieure à 0,5 kg/litre de carburant gazeux et de préférence compris entre 0,3 et 0,4 kg/litre, alors que la masse des réservoirs conventionnels cités dans l'art antérieur en acier est compris entre 0,85 et 1,05 kg/litre de gaz tandis que celle des réservoirs métalliques frettés ou autofrettés est comprise entre 0,65 et 0,70 kg/l.

Des essais d'homologation ont montré que le réservoir constitué de containers ayant un diamètre de 100 à 200 mm et une longueur variant entre 5 et 10 mètres, respecte les normes NF E 29-751, pour des pressions de service pouvant allant jusqu'à 300 bars.

Le réservoir selon l'invention peut être utilisé pour le stockage de tout type de fluide sous pression, plus particulièrement les hydrocarbures de substitution tels que le pétrole liquéfié (en abrégé GPL), le méthane, l'éthane, le propane, le butane et le gaz naturel.

On ne sortira pas du cadre de l'invention en plaçant le réservoir dans le coffre d'un véhicule. Il peut être positionné de manière horizontale ou verticale.

La légèreté offerte par un tel réservoir permet, sans sortir de l'invention, d'utiliser pour un même véhicule plusieurs réservoirs, chaque réservoir étant, par exemple, adapté au stockage d'un hydrocarbure donné.

On ne sortira pas du cadre de l'invention en adjoignant au container un dispositif de prélèvement d'une partie du carburant sous forme gazeuse facilitant le démarrage à froid du véhicule, comme il est bien connu des spécialistes.

L'homme de l'art sera en mesure d'imaginer, à partir de la description qui vient d'être donnée à titre illustratif et nullement limitatif, diverses variantes et modifications ne sortant pas du cadre de l'invention.

## Revendications

1. Système de stockage et de distribution de fluides sous pression, tels que des hydrocarbures gazeux destinés à alimenter le moteur d'un véhicule, comportant plusieurs containers (2, 3, 4; 32, 33, 34) comportant au moins un orifice d'entrée (10), des moyens d'admission et de contrôle de la distribution du fluide sous pression dans ledit système (15, Vr; 23, V1, V2), des lignes de transfert dudit fluide sous pression (5, 6, 7 ; 25, 26, 27, 28, 29, 30; 36, 37, 38, 39, 40, 41), lesdites lignes de transfert reliant les moyens d'admission et de contrôle à au moins un des orifices d'entrée (10) desdits containers, caractérisé en ce que :
- lesdits containers comportent une partie cylindrique ayant deux extrémités, ladite zone cylindrique étant constituée d'une gaine interne ondulée (16), les parties creuses desdites ondulations étant garnies d'un élément de renfort (17), et
- lesdits moyens d'admission et de contrôle (Vr; V1, V2) étant adaptés à permettre simultanément, pendant une partie au moins du remplissage des containers par le fluide sous pression, un libre passage au fluide sous pression entre lesdits moyens d'admission et de contrôle et au moins deux containers.

2. Système de stockage selon la revendication 1, caractérisé en ce lesdites lignes de transfert (5, 6, 7 ; 25, 26, 27, 28, 29, 30 ; 36, 37, 38, 39, 40, 41) comportent au moins un moyen de contrôle (V) du passage dudit fluide sous pression.

3. Système selon la revendication 1, caractérisé en ce qu'il comporte au moins un dispositif (14) de commande et de contrôle du passage dudit fluide sous pression entre lesdits moyens d'admission et de contrôle et au moins deux containers.

4. Système selon la revendication 1, caractérisé en ce que ledit élément de renfort (17) est un élément de renfort circonférentiel constitué d'une résine armée de fibres, tel que des fibres de verre ou des fibres de carbone.

5. Système selon l'une des revendications 1 ou 4, caractérisé en ce qu'un container comporte des moyens de résistance à la traction longitudinale (12) placés sur l'ensemble du container à l'exception des ouvertures dudit container, lesdites ouvertures étant situées à au moins une des extrémités de la zone cylindrique.

6. Système selon la revendication 1, caractérisé en ce que la gaine est en métal.

7. Système selon la revendication 1, caractérisé en ce que la gaine est constituée en un matériau thermoplastique.

8. Système selon la revendication 1, caractérisé en ce que la gaine est en polyéthylène haute densité.

9. Système selon la revendication 1, caractérisé en ce que la gaine est en polyamide.

10. Système selon la revendication 1, caractérisé en ce que la gaine est polyfluorure de vinylidène.

11. Système selon la revendication 1, caractérisé en ce qu'il comporte au moins un container auxiliaire de sécurité permettant de récupérer les fluides sous pression s'échappant d'au moins un des containers.

12. Système selon la revendication 1, caractérisé en ce que lesdits containers sont disposés sous forme de couches superposées en quinconce, les containers étant décalés les uns par rapport aux autres.

13. Système selon la revendication 1, caractérisé en ce que l'ensemble des containers est placé dans une enveloppe, l'espace compris entre ladite enveloppe et les containers étant rempli d'un matériau alvéolaire, tel que du polyuréthanne.

14. Utilisation du système selon l'une des revendications précédentes, comme container de gaz naturel sous pression disposé sur le toit d'un véhicule utilitaire dans le domaine des transports en commun ou de transports de marchandises.

## Patentansprüche

1. Speicher- und Verteilungssystem für unter Druck stehende Fluide wie zur Speisung eines Kraftfahrzeugmotors bestimmte gasförmige Kohlenwasserstoffe, mehrere Container (2, 3, 4; 32, 33, 34) umfassend, die wenigstens eine Eintrittsöffnung (10) umfassen, Einlaß- und Regelmittel für die Verteilung des Fluids unter Druck in diesem System (15, VR; 23, V1, V2), Förderleitungen für dieses Fluid unter Druck (5, 6, 7; 25, 26, 27, 28, 29, 30; 36, 37, 38, 39, 40, 41), wobei diese Förderleitungen die Einlaß- und Regelmittel mit wenigstens einer dieser Eintrittsöffnungen (10) dieser Container verbinden, dadurch gekennzeichnet, daß
- diese Container einen zylindrischen Teil mit zwei Enden umfassen, wobei die zylindrische Zone gebildet wird durch eine innere gewellte Hülle (16), die hohlen Teile dieser Wellungen mit einem Verstärkungselement (17) ausgekleidet sind und
- diese Einlaß- und Regelmittel (Vr; V1, V2) so ausgelegt sind, daß sie es ermöglichen, gleichzeitig während wenigstens eines Teils des Füllvorgangs der Container mit dem Fluid unter Druck einen freien Durchlaß dem unter Druck stehenden Fluid zwischen diesen Einlaß- und Regelmitteln und wenigstens zwei Behältern zu gewähren.

2. Speichersystem nach Anspruch 1,dadurch gekennzeichnet, daß diese Förderleitungen (5, 6, 7; 25, 26, 27, 28, 29, 30; 36, 37, 38, 39, 40, 41) wenigstens ein Regelmittel (V) für den Durchlaß dieses Fluids unter Druck umfassen.

3. System nach Anspruch 1, dadurch gekennzeichnet, daß es wenigstens eine Steuer- und Regeleinrichtung (14) für den Durchgang des Fluids unter Druck zwischen diesen Einlaß- und Regelmitteln und wenigstens zwei Behältern umfaßt.

4. System nach Anspruch 1, dadurch gekennzeichnet, daß dieses Verstärkungselement (17) ein Umfangsverstärkungselement ist, das aus einem Harz besteht, das mit Fasern wie Glasfasern oder Karbonfasern armiert ist.

5. System nach Anspruch 1 oder 4, dadurch gekennzeichnet, daß ein Behälter Mittel zum Widerstand gegen Längszug (12) umfaßt, die auf der Gesamtheit des Containers mit Ausnahme der öffnungen dieses Containers angeordnet sind, wobei diese öffnungen an wenigstens einem der Enden der zylindrischen Zone angeordnet sind.

6. System nach Anspruch 1, dadurch gekennzeichnet, daß die Hülle aus Metall besteht.

7. System nach Anspruch 1, dadurch gekennzeichnet, daß die Hülle aus einem thermoplastischen Material gebildet ist.

8. System nach Anspruch 1, dadurch gekennzeichnet, daß die Hülle aus Polyethylen hoher Dichte besteht.

9. System nach Anspruch 1, dadurch gekennzeichnet, daß die Hülle aus Polyamid besteht.

10. System nach Anspruch 1, dadurch gekennzeichnet, daß die Hülle aus Polyvinylidenfluorid besteht.

11. System nach Anspruch 1, dadurch gekennzeichnet, daß sie wenigstens einen Hilfssicherheitscontainer umfaßt, der es ermöglicht, die Fluide unter Druck zu gewinnen, die aus wenigstens einem der Behälter entweichen.

12. System nach Anspruch 1, dadurch gekennzeichnet, daß diese Behälter in Form von schachbrettartig übereinander angeordneten Schichten angeordnet sind, wobei die Behälter bezüglich einander versetzt sind.

13. System nach Anspruch 1, dadurch gekennzeichnet, daß die Gesamtheit von Behältern in einem Mantel untergebracht ist, wobei der Raum zwischen diesem Mantel und den Behältern mit einem zellenförmigen Material wie Polyurethan gefüllt ist.

14. Verwendung des Systems nach einem der vorhergehenden Ansprüche als Behälter für Erdgas unter Druck, der auf dem Dach eines Nutzfahrzeugs aus dem Bereich der öffentlichen Transporte oder der Gütertransporte angeordnet ist.

## Claims

1. A storage and delivery system for pressurised fluids, such as gaseous hydrocarbons, designed to supply the engine of a motor vehicle, composed of several containers (2, 3, 4; 32, 33, 34) having at least one inlet orifice (10), inlet and control means for distributing the pressurised fluid within the system (15, Vr; 23, V1, V2), transfer lines for the pressurised fluid (5, 6, 7; 25, 26, 27, 28, 29, 30; 36, 37, 38, 39, 40, 41), said transfer lines connecting the inlet and control means to at least one of the inlet orifices (10) of said containers, characterised in that:
- said containers have a cylindrical portion with two ends, said cylindrical area being an internal corrugated sheath (16) in which the hollow portions of said corrugations are fitted with a reinforcing element (17), and
- said inlet and control means (Vr; V1, V2) are designed to allow, simultaneously and during some of the operation whereby the containers are filled with pressurised fluid, a free passage for the pressurised fluid between the inlet and control means and at least two containers.

2. A storage system as claimed in claim 1, characterised in that said transfer lines (5, 6, 7; 25, 26, 27, 28, 29, 30; 36, 37, 38, 39, 40, 41) have at least one means for controlling (V) the passage of said pressurised fluid.

3. A system as claimed in claim 1, characterised in that it has at least one device (14) for controlling and monitoring the passage of said pressurised fluid between said inlet and control means and at least two containers.

4. A system as claimed in claim 1, characterised in that said reinforcing element (17) is a circumferential reinforcement made from a resin strengthened with fibres such as glass fibres or carbon fibres.

5. A system as claimed in one of claims 1 or 4, characterised in that a container has longitudinal tensile strengthening means (12) placed over the entire container except for the openings of said container, said openings being located at one of the ends at least of the cylindrical area.

6. A system as claimed in 1, characterised in that the sheath is in metal.

7. A system as claimed in claim 1, characterised in that the sheath is made from a thermoplastic material.

8. A system as claimed in claim 1, characterised in that the sheath is made from high density polyethylene.

9. A system as claimed in claim 1, characterised in that the sheath is made from polyamide.

10. A system as claimed in claim 1, characterised in that the sheath is made from polyvinylidene fluoride.

11. A system as claimed in claim 1, characterised in that it has at least one auxiliary safety container allowing pressurised fluids escaping from at least one of the containers to be collected.

12. A system as claimed in claim 1, characterised in that said containers are disposed in superimposed layers in a staggered effect, the containers being offset from one another.

13. A system as claimed in claim 1, characterised in that the set of containers is placed in a casing and the space left between said casing and the containers is filled with a foam material such as polyurethane.

14. Use of the system as claimed in one of the preceding claims as a container for pressurised natural gas disposed on the roof of a utility vehicle for the purposes of public transport or freight transport.
